# EUROPÄISCHE PATENTANMELDUNG

(11) **EP 4 039 726 A1**
(43) Veröffentlichungstag der Anmeldung: **10.08.2022**
(21) Anmeldenummer: 21155434.0
(22) Anmeldetag: 05.02.2021
(51) Int. Cl.: C08G 64/30, C08G 65/26

(54) **VERFAHREN ZUR HERSTELLUNG VON POLYETHERCARBONATALKOHOLEN**

(71) Anmelder: Covestro Deutschland AG, 51373 Leverkusen (DE)
(72) Erfinder: Wolf, Aurel, 42489 Wülfrath (DE); Schuetze, Mike, 51379 Leverkusen (DE); Sebastian, Marina, 53507 Dernau (DE); Guertler, Christoph, 50735 Köln (DE)
(74) Vertreter: Levpat

(57) **Zusammenfassung**

Gegenstand der Erfindung ist ein Verfahren zur Herstellung von Polyethercarbonatalkoholen durch Anlagerung von cyclischen Carbonaten an eine H-funktionelle Starterfunktion in einem Reaktor in Anwesenheit eines Katalysators gemäß der Formel

MₙX (I),

wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist, bevorzugt C1 bis C12-Alkylrest,
dadurch gekennzeichnet, dass das cyclische Carbonat und die H-funktionelle Starterverbindung kontinuierlich in den Reaktor zudosiert werden und das resultierende Reaktionsgemisch kontinuierlich aus dem Reaktor entfernt wird.

## Beschreibung

Die vorliegende Erfindung betrifft ein Verfahren zur Herstellung von Polyethercarbonatalkoholen, bevorzugt Polyethercarbonatpolyolen, durch katalytische Anlagerung cyclischer Carbonate an eine H-funktionelle Startersubstanz in einem Reaktor, wobei die Reaktanden kontinuierlich zudosiert werden.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572) durchgeführt.

Ebenfalls offenbart ist der Einsatz von Katalysatoren wie beispielsweise Na₃VO₄ und Na₂WO₄ für die Anlagerung cyclischen Ethylencarbonats an H-funktionellen Startersubstanzen (R.F. Harris, Journal of Applied Polymer Science, 1989, 37, 183-200, EP19192407.5 und EP19192409.1). Diese Anlagerung erfolgt nach dem Prinzip einer ringöffnenden Polymerisation (auch ROP genannt) wobei Anteile des im cyclischen Carbonat gebundenen CO₂ bei der Polymerisation entweichen. Verfahren mit diesen Katalysatoren führen dementsprechend nicht zu Polycarbonatpolyolen, sondern zu Polyethercarbonatpolyolen. Die Polyethercarbonatpolyole wurden dabei in einer Batch-Fahrweise hergestellt. Angaben zu der Molmassenverteilung der Polyethercarbonatpolyole werden nicht gemacht.

Unter einer Batch-Fahrweise im Sinne dieser Erfindung wird verstanden, dass sämtliche Edukte, also cyclisches Carbonat und H-funktionelle Startersubstanz vor Beginn der Reaktion in den Reaktor eingebracht werden. Im Rahmen dieser Erfindung wird unter einer Semibatch-Fahrweise verstanden, dass wenigstens einer der zuvor genannten Stoffe über einen gewissen Zeitraum dem Reaktor zugeführt wird. In beiden Verfahrensweisen muss zur Produktentnahme das Verfahren gestoppt werden.

Aufgabe der vorliegenden Erfindung war die Bereitstellung eines Verfahrens zur Herstellung von Polyethercarbonatalkoholen mit einer engen Molmassenverteilung. Vorteilhaft bei Polymeren mit einer engen Molmassenverteilung ist, dass die Schwankungen von physikalischen Eigenschaften dann auf einen engen Bereich begrenzt sind.

Überraschend wurde gefunden, dass die technische Aufgabe gelöst wird durch ein Verfahren zur Herstellung von Polyethercarbonatalkoholen durch Anlagerung von cyclischen Carbonaten an eine H-funktionelle Starterfunktion in einem Reaktor in Anwesenheit eines Katalysators gemäß der Formel

MₙX (I),

wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist, bevorzugt C1 bis C12-Alkylrest,
dadurch gekennzeichnet, dass das cyclische Carbonat und die H-funktionelle Starterverbindung kontinuierlich in den Reaktor zudosiert werden und das resultierende Reaktionsgemisch kontinuierlich aus dem Reaktor entfernt wird.

Die Anlagerung des cyclischen Carbonats wird beispielsweise bei einer Temperatur von 110°C bis 220°C, bevorzugt 130°C bis 200°C, besonders bevorzugt 140°C bis 180°C durchgeführt, wobei gegebenenfalls ein Inertgas-Strom (beispielsweise von Argon oder Stickstoff) durch den Reaktor geleitet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).
Bevorzugter Gegenstand der Erfindung ist auch ein Verfahren, wobei die H-funktionelle Startersubstanzen, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird der Katalysator in einer Menge eingesetzt, so dass der Gehalt an Katalysator im resultierenden Reaktionsprodukt 10 bis 50000 ppm, besonders bevorzugt 20 bis 40000 ppm und höchst bevorzugt 50 bis 30000 ppm beträgt. Der Katalysator kann in fester Form oder als Suspension in cyclischem Carbonat, in H-funktioneller Startersubstanz oder in einer Mischung aus den genannten zugegeben werden, bevorzugt wird der Katalysator in cyclischen Carbonat und H-funktioneller Startsubstanz suspendiert und kontinuierlich zugegeben. In einer bevorzugten Ausführungsform wird in die Suspension aus H-funktioneller Startersubstanz, Katalysator und cyclischen Carbonats bei einer Temperatur von 20°C bis 120°C, besonders bevorzugt von 40°C bis 100°C Inertgas (beispielsweise Argon oder Stickstoff) eingeleitet.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Ein Rührkessel oder Schlaufenreaktor wird je nach Ausführungsform und Betriebsweise über den Reaktormantel, innen liegende und/oder in dem Umpumpkreislauf befindliche Kühlflächen gekühlt.
Unter Schlaufenreaktoren fallen im Allgemeinen Reaktoren mit interner und/oder externer Stoffrückführung (ggf. mit im Kreislauf angeordneten Wärmetauscherflächen), wie beispielsweise ein Strahlschlaufenreaktor, Jet-Loop Reaktor oder Venturi-Loop Reaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren oder mehreren hintereinander geschalteten Rührkesseln. Bevorzugt wird das Verfahren in einem oder mehreren kontinuierlich gerührten Rührkessel oder einem Schlaufenreaktor durchgeführt, besonders bevorzugt in einem oder mehreren kontinuierlich gerührten Rührkesseln.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

### H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH, -NH₂ und -CO₂H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF^{®} der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten und Wasser, eingesetzt. Beispielhaft handelt es sich bei den C₁-C₂₄ Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure. Bevorzugt werden als monofunktionelle Startersubstanzen Fettalkohole und Fettsäuren eingesetzt.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionelle Startersubstanz kann auch aus der Substanzklasse der Polyetherpolyole ausgewählt sein, die ein zahlenmittleres Molekulargewicht Mₙ im Bereich von 18 bis 4500 g/mol und eine Funktionalität von 2 bis 3 aufweisen. Das zahlenmittlere Molekulargewicht Mₙ wird gemäß DIN 55672-1 (August 2007) gemessenen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mₙ im Bereich von 150 bis 8000 g/mol bei einer Funktionalität von 2 bis 3, Polyetherpolyole mit einem Molekulargewicht Mₙ im Bereich von 150 bis 8000 g/mol und einer Funktionalität von 2 bis 3, Fettsäuren und Fettalkoholen.

### Katalysator

Als geeignete Katalysatoren für die Anlagerung von cyclischen Carbonat an H-funktionelle Startersubstanzen werden Katalysatoren gemäß Formel (I) eingesetzt

MₙX (I),

wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = Po₄³⁻ oder VO₄³⁻,
R ein organischer Rest ist.

Das Anion X des Katalysators ist bevorzugt VO₃⁻, VO₄³⁻ oder PO₄³⁻. Als Alkalimetallkation M wird bevorzugt Na⁺ oder K⁺ eingesetzt. Ganz besonders bevorzugt wird als Katalysator eine Verbindung ausgewählt aus der Gruppe bestehen aus Na₃VO₄, K₃VO₄, NaVO₃, KVO₃, Na₃PO₄ und K₃PO₄ eingesetzt. Der organische Rest R kann ein gesättigter oder ungesättigter, linearer oder verzweigter, aliphatischer oder cycloaliphatischer oder einen aromatischen oder araliphatischen Rest sein, der gegebenenfalls Heteroatome, wie N, S oder O enthalten kann. Bevorzugt handelt es sich bei dem organischen Rest R um einen C1 bis C12-Alkylrest, besonders bevorzugt handelt es sich um einen Methylrest.

Die nach dem erfindungsgemäßen Verfahren erhaltenen Polyethercarbonatalkohole können beispielsweise durch Umsetzung mit Di- und/oder Polyisocyanaten zu Polyurethanen weiterverarbeitet werden.
Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Emulgatoren, Dispergiermittel, Schmiermitteln, Prozesschemikalien für die Papier- oder Textilherstellung, medizinische Anwendungen, Wirkstofffreisetzung, kosmetischen Formulierungen, wie beispielsweise in Haut- oder Sonnenschutzcreme oder Haarpflegeprodukten zu finden.

### Experimenteller Teil

Experimentell ermittelte OH-Zahlen wurden gemäß der Vorschrift DIN 53240-2 (November 2007) bestimmt.

Die Molekulargewichte Mₙ und M_{w} der entstandenen Polyethercarbonatpolyole wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen und Polystyrolproben mit bekannter Molmasse zur Kalibrierung verwendet. Die Polydispersität D_{M} wurde gemäß D_{M}=M_{w}/Mₙ bestimmt.

### Eingesetzte Rohstoffe:

Alle aufgezählten Chemikalien wurden vom genannten Hersteller in der angegebenen Reinheit erworben und ohne weitere Behandlung für die Synthese von Polyethercarbonatalkoholen verwendet.

| | |
|---|---|
| Cyclisches Ethylencarbonat (cEC): | Sigma-Aldrich 99 % |
| K₃PO₄: | Sigma-Aldrich |
| 1,1,1-Trimethylolpropan (TMP): | Acros Organics B.V.B.A. (BE) |
| *o*-Dichlorbenzol: | Sigma-Aldrich |

### Beispiel 1: Kontinuierliche Zugabe von cEC, TMP und K3PO4 mit dem Ziel von 80% Umsatz

Ein 500 mL Vierhalsglaskolben mit Überlauf (450 mL Maximalvolumen) wurde mit Rückflusskühler, Rührfisch, Thermofühler, Stickstoffzuleitung und Gasaustritt/Gasabfuhr mit Überdruckventil ausgestattet. 450 mL *o*-Dichlorbenzol wurden in den Reaktionskolben vorgelegt. Für 30 Minuten wurden 10 L/h Stickstoff eingeleitet, der Rührer auf 800 U/min eingestellt und auf 170 °C aufgeheizt. Anschließend wurde die Suspensionsdosierung von 87.6 Gew.% cyclisches Ethylencarbonat, 9.8 Gew.% TMP und 2.6 Gew.% K₃PO₄ (bei 80 °C) in das Reaktionsgefäß gestartet. Die Verweilzeit τ wird über die Flussrate angepasst auf 91 min. Der entstehende Gasstrom wurde durch den Rückflusskühler und einen Blasenzähler abgelassen.

Die Reaktionsmischung wird hinter dem Überlauf in einem Auffanggefäß gesammelt. Nachdem stationäre Konzentrationen im Rührkessel erreicht worden sind wird eine Probe gezogen und analysiert (s. Tabelle 1).

### Beispiel 2 (Vergleich): Batchverfahren mit Vorlage von Zugabe von cEC, TMP und K3PO4 mit dem Ziel von 80% Umsatz

Ein 500 mL Vierhalsglaskolben wurde mit Rückflusskühler, Rührfisch, Thermofühler, Stickstoffzuleitung und Gasaustritt/Gasabfuhr mit Überdruckventil ausgestattet. Eine Suspension aus 87.6 Gew.% cyclisches Ethylencarbonat, 9.8 Gew.% TMP und 2.6 Gew.% K₃PO₄ wird vorgelegt und für 30 Minuten wurden 10 L/h Stickstoff eingeleitet, der Rührer auf 800 U/min eingestellt und anschließend auf 170 °C aufgeheizt. Der entstehende Gasstrom wurde durch den Rückflusskühler und einen Blasenzähler abgelassen. Die Reaktion wurde bis ∼ 80 % Umsatz gefahren und eine Probe zur Analyse genommen (s. Tabelle 1).

### Beispiel 3: Kontinuierliche Zugabe von cEC, TMP und K3PO4 mit dem Ziel von 90% Umsatz

Das Verfahren wurde analog zum Beispiel 1 durchgeführt, wobei die Verweilzeit *τ* über die Flussrate auf 116 min angepasst wurde.

### Beispiel 4 (Vergleich): Batchverfahren mit Vorlage von Zugabe von cEC, TMP und K3PO4 mit dem Ziel von 90% Umsatz

Das Verfahren wurde analog zum Beispiel 2 durchgeführt, wobei die Reaktion bis zu einem Umsatz von 90 % durchgeführt wurde.

**Tabelle 1: Übersicht über die Versuchsergebnisse.***

| **Beispiel** | **Umsatz (Ziel) [%]** | **Reaktionsmodus** | **Umsatz (NMR) [%]** | ***M*ₙ [g/mol]** | ***Ð_{M}*** |
|---|---|---|---|---|---|
| 1 | 80 | Conti (*τ* = 91 min.) | 82,3 | 546 | 2,59 |
| 2* | | Batch | 83,2 | 661 | 2,96 |
| 3 | 90 | Conti (*τ* = 116 min.) | 89,4 | 674 | 2,35 |
| 4* | | Batch | 91,2 | 681 | 3,12 |

| | | | | | |
|---|---|---|---|---|---|
| * Vergleichsbeispiel | | | | | |

## Patentansprüche

1. Verfahren zur Herstellung von Polyethercarbonatalkoholen durch Anlagerung von cyclischen Carbonaten an eine H-funktionelle Starterfunktion in einem Reaktor in Anwesenheit eines Katalysators gemäß der Formel
MₙX (I),
wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist, bevorzugt C1 bis C12-Alkylrest,
**dadurch gekennzeichnet, dass** das cyclische Carbonat und die H-funktionelle Starterverbindung kontinuierlich in den Reaktor zudosiert werden und das resultierende Reaktionsgemisch kontinuierlich aus dem Reaktor entfernt wird.

2. Verfahren gemäß Anspruch 1, **dadurch gekennzeichnet, dass** der Katalysator kontinuierlich in den Reaktor dosiert wird.

3. Verfahren gemäß Anspruch 2, **dadurch gekennzeichnet, dass** der Katalysator in H-funktioneller Startersubstanz suspendiert kontinuierlich zugegeben wird.

4. Verfahren gemäß einem der Ansprüche 1 bis 3, **dadurch gekennzeichnet, dass** die Anlagerung im Reaktor unter Inertgasatmosphäre stattfindet.

5. Verfahren gemäß einem der Ansprüche 1 bis 4, **dadurch gekennzeichnet, dass** der Reaktor ein kontinuierlich gerührter Rührkesseloder ein Schlaufenreaktor ist.

6. Verfahren gemäß einem der Ansprüche 1 bis 5, **dadurch gekennzeichnet, dass** in Formel (I) M ausgewählt ist aus den Alkalimetallkationen Na⁺ oder K⁺.

7. Verfahren gemäß einem der Ansprüche 1 bis 5, **dadurch gekennzeichnet, dass** in Formel (I) X ausgewählt ist aus den Anionen PO₄³⁻, VO³⁻ oder VO₄³⁻.

8. Verfahren gemäß einem der Ansprüche 1, bis 7 **dadurch gekennzeichnet, dass** als Katalysator eine Verbindung ausgewählt aus der Gruppe bestehend aus Na₃VO₄, K₃VO₄, NaVO₃, KVO₃, Na₃PO₄ und K₃PO₄ eingesetzt wird.

9. Verfahren gemäß einem der Ansprüche 1 bis 8, **dadurch gekennzeichnet, dass** als cyclisches Carbonat Propylencarbonat, Ethylencarbonat oder eine Mischung aus Propylencarbonat und Ethylencarbonat eingesetzt wird.

10. Verfahren gemäß einem der Ansprüche 1 bis 9, **dadurch gekennzeichnet, dass** die H-funktionelle Startersubstanz ein nach DIN 55672-1 (August 2007) gemessenes zahlenmittleres Molekulargewicht bis 10.000 g/mol, bevorzugt bis 5.000 g/mol, besonders bevorzugt bis 2.500 g/mol aufweist.

11. Verfahren gemäß einem der Ansprüche 1 bis 10, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem nach DIN 55672-1 (August 2007) gemessenen zahlenmittleren Molekulargewicht Mₙ im Bereich von 150 bis 8000 g/mol bei einer Funktionalität von 2 bis 3, Polyetherpolyole mit einem nach DIN 55672-1 (August 2007) gemessenen zahlenmittleren Molekulargewicht Mₙ im Bereich von 150 bis 8000 g/mol und einer Funktionalität von 2 bis 3, Fettsäuren und Fettalkoholen.

12. Verfahren gemäß einem der Ansprüche 1 bis 11, **dadurch gekennzeichnet, dass** der Katalysator in einem Anteil von 10 bis 50000 ppm, besonders bevorzugt 20 bis 40000 ppm und höchst bevorzugt 50 bis 30000 ppm vorliegt.
